(19) Europäisches Patentamt
European Patent Office
Office européen des brevets

(11) **EP 3 071 989 B1**

(12) **EUROPÄISCHE PATENTSCHRIFT**

(45) Veröffentlichungstag und Bekanntmachung des Hinweises auf die Patenterteilung:
**06.11.2019 Patentblatt 2019/45**

(21) Anmeldenummer: **14771897.7**

(22) Anmeldetag: **23.09.2014**

(51) Int Cl.:
**G01S 7/527** (2006.01)   **G01S 7/536** (2006.01)
**G01S 15/10** (2006.01)   **G01S 15/34** (2006.01)
**G01S 15/58** (2006.01)

(86) Internationale Anmeldenummer:
**PCT/EP2014/070238**

(87) Internationale Veröffentlichungsnummer:
**WO 2015/074785 (28.05.2015 Gazette 2015/21)**

(54) **VERFAHREN UND EINE VORRICHTUNG ZUR MESSUNG EINER RELATIVGESCHWINDIGKEIT MITTELS EINES AKUSTISCHEN SENSORS**

METHOD AND A DEVICE FOR MEASURING A RELATIVE VELOCITY BY MEANS OF AN ACOUSTIC SENSOR

PROCÉDÉ ET DISPOSITIF DE MESURE D'UNE VITESSE RELATIVE AU MOYEN D'UN CAPTEUR ACOUSTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.11.2013 DE 102013223701**

(43) Veröffentlichungstag der Anmeldung:
**28.09.2016 Patentblatt 2016/39**

(73) Patentinhaber: **Robert Bosch GmbH**
**70442 Stuttgart (DE)**

(72) Erfinder:
• **SCHMID, Dirk**
**75397 Simmozheim (DE)**
• **ROKA, Andras**
**1124 Budapest (HU)**
• **SCHUMANN, Michael**
**70597 Stuttgart (DE)**
• **SCHNEIDER, Marcus**
**71642 Ludwigsburg (DE)**

(56) Entgegenhaltungen:
DE-A1-102009 034 615     US-A- 6 072 424
US-A1- 2011 122 014

EP 3 071 989 B1

**Beschreibung**

Stand der Technik

Die vorliegende Erfindung betrifft ein Verfahren und eine Vorrichtung zur Messung einer Relativgeschwindigkeit mittels eines akustischen Sensors.
In der Radartechnik ist es ein gängiges Verfahren, den Abstand zu Objekten mittels einer frequenzmodulierten Radarwelle zu bestimmen (FMCW). Dabei wird die Frequenz einer ausgesendeten Welle z.B. linear erhöht. Durch Vergleich der momentan vom Radarsensor empfangenen Frequenz mit der momentan gesendeten Frequenz wird der Abstand zum Objekt ermittelt. Ist der Frequenzunterschied sehr groß, so ist das reflektierende Objekt weit entfernt. Ist der Frequenzunterschied klein, so ist das reflektierende Objekt nahe am Radarsensor.
Ebenso ist es in der Radartechnik üblich, die Relativgeschwindigkeit mittels zweier unterschiedlich modulierter Radarwellen zu messen. Dazu wird die Frequenz der einen Welle kontinuierlich erhöht (Frequenzrampe aufwärts) und die Frequenz der anderen Welle kontinuierlich erniedrigt (abfallende Frequenzrampe). Bewegt sich das reflektierende Objekt relativ zum Radarsensor so werden beide Wellen in eine bestimmte Richtung frequenzverschoben. Bei einer Annäherung erfolgt eine Frequenzverschiebung hin zu höheren Frequenzen. Dabei führt die dopplerbedingte Frequenzerhöhung im Fall der ansteigenden Frequenzrampe zu einer scheinbaren Vergrößerung des Abstandes zu dem reflektierenden Objekt (der Frequenzunterschied zwischen der momentan gesendeten Frequenz und der momentan empfangenen Frequenz nimmt ab). Im Fall der absteigenden Frequenzrampe nimmt der Abstand zu dem reflektierenden Objekt scheinbar zu (der Frequenzunterschied zwischen der momentan gesendeten Frequenz und der momentan empfangenen Frequenz nimmt zu). Die Differenz beider Abstände ist ein Maß für die Relativgeschwindigkeit. Der Mittelwert entspricht dem tatsächlichen Abstand.
Da die so gewonnene Geschwindigkeitsinformation eine zusätzliche Messgröße darstellt, lässt sich der Distanz- und Geschwindigkeitsverlauf eines Objekts vor dem Radarsensor schon mit einer einzelnen Messung erkennen. Bei reinen distanzmessungsbasierten Verfahren lässt sich der Distanz- und Geschwindigkeitsverlauf nur mittels des Vergleichs von zeitlich aufeinanderfolgenden Distanzmessungen ermitteln. In der Regel sind dazu mindestens drei Messungen notwendig: Eine erste Messung zum Erkennen, dass sich ein Objekt vor dem Sensor befindet, eine zweite Messung zum Ermitteln, ob es sich um eine Bewegung handeln könnte, und eine dritte Messung zum Bestätigen, dass die erste und die zweite Messung zusammengehörig waren und die abgeleitete Geschwindigkeit wirklich Folge einer Bewegung war.
Ultraschallsysteme sind nicht in der Lage, während des Sendevorgangs gleichzeitig auch die Echoantwort zu empfangen ("Senden und Hören ist gleichzeitig nicht möglich"), weil die Membranamplitude während des Sendens um etliche Größenordnungen höher ist, als ein z.B. in 5m Entfernung reflektiertes Signal als Echo auf der Membran erzeugen könnte, und weil während des Sendevorgangs eine Schwingung aufgezwungen wird, welche durch eingehenden Schall nur unwesentlich beeinträchtigt wird. Das FMCW-Verfahren ist nicht anwendbar, da der Sende- und Empfangspfad bei Ultraschallsystemen auf demselben mechanisch schwingfähigen System ausgeführt wird, während beim Radar Sende- und Empfangspfad getrennt sind.

Offenbarung der Erfindung

Das erfindungsgemäße Verfahren zur Messung einer Relativgeschwindigkeit mittels eines akustischen Sensors, umfassend die Schritte eines Erzeugens eines akustischen Signals mit einem ersten Frequenzverlauf, der den Verlauf einer Frequenz des akustischen Signals über einen Zeitverlauf beschreibt, wobei der erste Frequenzverlauf zumindest einen ersten Signalabschnitt mit ansteigender Frequenz und einen zweiten Signalabschnitt mit abfallender Frequenz umfasst, eines Aussendens des akustischen Signals durch einen akustischen Sensor, eines Empfangens eines von einem Objekt reflektierten akustischen Signals mit einem zweiten Frequenzverlauf, der den Verlauf einer Frequenz des reflektierten akustischen Signals über einen Zeitverlauf beschreibt, wodurch der zweite Frequenzverlauf zumindest einen ersten reflektierten Signalabschnitt mit ansteigender Frequenz und einen zweiten reflektierten Signalabschnitt mit abfallender Frequenz umfasst, durch den akustischen Sensor, eines Auswählen eines ersten Punktes aus dem ersten reflektierten Signalabschnitt des zweiten Frequenzverlaufs des reflektierten akustischen Signals gemäß einem Auswahlkriterium, eines Auswählen eines zweiten Punktes aus dem zweiten reflektierten Signalabschnitt des zweiten Frequenzverlaufs des reflektierten akustischen Signals gemäß dem Auswahlkriterium, und eines Bestimmen einer Relativgeschwindigkeit durch einen Vergleich eines durch den ersten und den zweiten Punkt in dem zweiten Frequenzverlauf des reflektierten akustischen Signals beschriebenen Werts mit einem Referenzwert.
Die erfindungsgemäße Vorrichtung zur Messung einer Relativgeschwindigkeit mittels eines akustischen Sensors, umfasst einen Signalgenerator, der zum Erzeugen eines akustischen Signals mit einem ersten Frequenzverlauf geeignet ist, wobei der erste Frequenzverlauf zumindest einen ersten Signalabschnitt mit ansteigender Frequenz und einen zweiten Signalabschnitt mit abfallender Frequenz umfasst, einen akustischen Sensor, der zum Aussenden des akustischen Signals und zu einem Empfangen eines von einem Objekt reflektierten akustischen Signals mit einem zweiten Frequenzverlauf geeignet ist, der den Verlauf einer Frequenz des reflektierten akustischen Signals über einen Zeitverlauf beschreibt, wodurch der zweite Frequenzverlauf zumindest einen ersten reflektierten Signalabschnitt mit ansteigender Frequenz und einen zweiten reflektierten Signalabschnitt mit abfallender Frequenz umfasst, eine Auswahleinheit, die zum Auswählen eines ersten Punktes aus dem reflektierten ersten Signalabschnitt des zweiten Frequenzverlaufs des reflektierten akustischen Signals gemäß einem Auswahlkriterium, und zum Auswählen eines zweiten Punktes aus dem reflektierten zweiten Signalabschnitt des zweiten Frequenzverlaufs des reflektierten akustischen Signals gemäß dem Auswahlkriterium geeignet ist, und eine Bestimmungseinheit, die zum Bestimmen einer Relativgeschwindigkeit durch einen Vergleich eines durch den ersten und den zweiten Punkt in dem zweiten Frequenzverlauf des reflektierten akustischen Signals beschriebenen Werts mit einem Referenzwert geeignet ist.

Durch das erfindungsgemäße Verfahren und die erfindungsgemäße Vorrichtung wird ein schnelles Ermitteln einer tatsächlichen Relativgeschwindigkeit eines Objekts ermöglicht, ohne dass ein Umweg über das zeitliche Erfassen der Objektabstandsänderung notwendig ist. Es wird somit eine exaktere und schnellere Ermittlung der Relativgeschwindigkeit im Vergleich zu rein abstandsbasierten Verfahren erreicht. Damit können auch relevante Objekte schneller erkannt werden. So wird durch eine schnelle Unterscheidung von sich nähernden und sich entfernenden Objekten eine schnelle Warnung ermöglicht. Dies ist besonders in Systemen wie einer Toten-Winkel-Überwachung, einer Auffahrwarnung oder einem System zur Airbag-Auslösung vorteilhaft. Das Verfahren kann auf einfache Weise zu bestehenden abstandsmessenden Verfahren addiert werden. In Kombination mit einer Abstandsmessung wird durch die zusätzliche Messgröße ein besseres Trennen von Störeinflüssen und realen Objekten möglich.

Die Unteransprüche zeigen bevorzugte Weiterbildungen der Erfindung.

Insbesondere ist der Referenzwert ein Wert, der durch den ersten und den zweiten Punkt in dem zweiten Frequenzverlauf des reflektierten akustischen Signals beschriebenen wird, wenn das Objekt keine relative Bewegung gegenüber dem akustischen Sensor aufweist. Dies ist vorteilhaft, da somit eine Bewegungsrichtung des Objekts gegenüber dem Fahrzeug, also eine Annäherung bzw. ein Entfernen, dadurch identifiziert werden kann, ob der Referenzwert überschritten bzw. unterschritten wird.

Bevorzugt wird das reflektierte akustische Signal zum Auswählen des ersten und des zweiten Punktes zur Darstellung im Frequenzbereich in den zweiten Frequenzverlauf transformiert. Auf diese Weise wird das Auswählen des ersten und des zweiten Punktes vereinfacht.

Es ist vorteilhaft, wenn die Schritte des Auswählens des ersten Punktes, des Auswählens des zweiten Punktes und des Bestimmens der Relativgeschwindigkeit mehrfach durchlaufen werden, wobei für jeden Durchlauf ein unterschiedliches Auswahlkriterium angewendet wird, und das Verfahren ferner einen abschließenden Schritt umfasst, in dem ein Mittelwert aus den bestimmten Relativgeschwindigkeiten gebildet wird. Somit wird die Präzision der Messung der der Relativgeschwindigkeit weiter verbessert.

Des Weiteren ist es vorteilhaft, wenn das Auswahlkriterium eine vorgegebene Frequenz ist, und das Bestimmen der Relativgeschwindigkeit durch einen Vergleich eines Zeitintervalls mit dem Referenzwert erfolgt, wobei das Zeitintervall durch einen zeitlichen Abstand zwischen dem ersten und dem zweiten Punkt in dem zweiten Frequenzverlauf des reflektierten akustischen Signals beschrieben ist. Ein solches Auswählen des ersten und des zweiten Punktes kann durch eine besonders einfache und somit auch kostengünstige Schaltungsanordnung realisiert werden. Es ist zudem keine Berechnung eines Korrelationssignals mittels eines Optimalfilters erforderlich, wodurch Rechenschritte eingespart werden können.

Ebenso vorteilhaft ist es, wenn das Auswahlkriterium ein vorgegebener zeitlicher Abstand des ersten und des zweiten Punktes zu einem Übergangspunkt zwischen dem reflektierten ersten und dem reflektierten zweiten Signalabschnitt in dem zweiten Frequenzverlauf ist, und das Bestimmen der Relativgeschwindigkeit durch einen Vergleich einer Mittelfrequenz mit dem Referenzwert erfolgt, wobei die Mittelfrequenz durch einen Mittelwert der Frequenz an dem ersten und dem zweiten Punkt des zweiten Frequenzverlaufs des reflektierten akustischen Signals beschrieben ist. Somit wird ein besonders robustes Verfahren geschaffen, welches auch bei einer gleichzeitigen Fehlbestimmung eines Objektabstandes eine korrekte Relativgeschwindigkeit bestimmt.

Bevorzugt wird der Übergangspunkt in dem zweiten Frequenzverlauf dadurch erkannt, dass das reflektierte akustische Signal mit einem Optimal-Filter gefiltert wird. Ein solcher Optimal-Filter wird in gängigen Ultraschallsystemen im Rahmen der Abstandsbestimmung genutzt. Eine gleichzeitige erfindungsgemäße Nutzung führt zu einer reduzierten Anzahl von Bauelementen.

Weiterhin bevorzugt wird bei einer wiederholten Ausführung des Verfahrens die Dauer des ersten Signalabschnitts und die Dauer des zweiten Signalabschnitts bei einer ersten Ausführung des Verfahrens gegenüber der Dauer des ersten Signalabschnitts und/oder der Dauer des zweiten Signalabschnitts bei einer weiteren Ausführung des Verfahrens variiert. Auf diese Weise können Fehlmessungen durch Störeinflüsse im Übertragungsfeld des Ultraschallsignals minimiert werden.

Insbesondere umfasst der erste Frequenzverlauf mehrere Paare von ersten Signalabschnitten und zweiten Signalabschnitten und der zweite Frequenzverlauf umfasst somit mehrere Paare von reflektierten ersten Signalabschnitten und reflektierten zweiten Signalabschnitten. Das Auswählen eines ersten Punktes sowie das Auswählen eines zweiten Punktes wird dabei für jedes der Paare von reflektierten ersten Signalabschnitten und reflektierten zweiten Signalabschnitten durchgeführt, das Bestimmen einer Relativgeschwindigkeit wird für jedes der Paare von reflektierten ersten und reflektierten zweiten Signalabschnitten durchgeführt. Das Verfahren umfasst ferner einen abschließenden Schritt, in dem ein Mittelwert aus den bestimmten Relativgeschwindigkeiten gebildet wird. Auch dies ist vorteilhaft, da die Präzision der Messung der der Relativgeschwindigkeit weiter verbessert wird. Es können mehrere Messungen innerhalb eines Sende- und Empfangszyklus des akustischen Sensors durchgeführt werden.

Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:

Figur 1    ein Ablaufdiagramm für alle Ausführungsformen des erfindungsgemäßen Verfahrens,

Figur 2    ein beispielhafter erster Frequenzverlauf eines akustischen Signals,

Figur 3    eine schematische Darstellung des Aussendens des akustischen Signals und des Empfangens des reflektierten akustischen Signals in einem Zeitverlauf,

Figur 4    ein Frequenz-Zeit-Diagramm welches das reflektierte akustische Signal 3 bei unterschiedlichen Dopplerverschiebungen zeigt,

Figur 5    eine Prinzipdarstellung des Verfahrens in einer ersten Ausführungsform,

Figur 6    eine Prinzipdarstellung des Verfahrens in einer zweiten Ausführungsform, und

Figur 7    ein Frequenz-Zeit-Diagramm des reflektierten akustischen Signals 3 bei korrekter Auswahl eines Übergangspunktes und ein Frequenz-Zeit-Diagramm des reflektierten akustischen Signals 3 bei fehlerhafter Auswahl eines Übergangspunktes, in der zweiten Ausführungsform.

Ausführungsformen der Erfindung

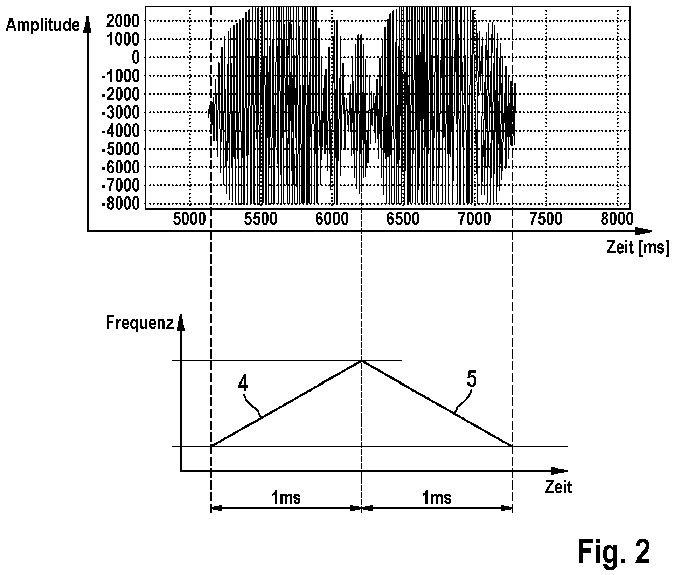

Die Erfindung kombiniert die bei Ultraschallsensoren übliche Pulsmodulation mit einer Frequenzmodulation und ermöglicht so die Bestimmung einer Relativgeschwindigkeit $v_{rel}$ durch Auswertung der Dopplerverschiebung eines reflektierten akustischen Signals gegenüber einem akustischen Signal.

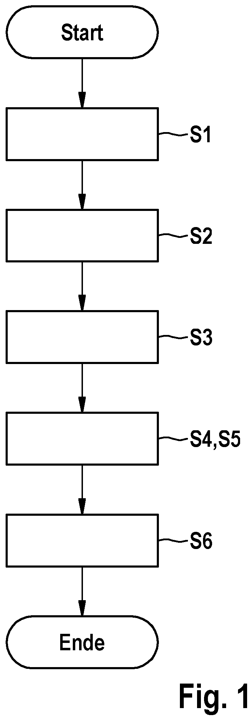

Figur 1 zeigt ein Ablaufdiagramm für alle Ausführungsformen des erfindungsgemäßen Verfahrens.
In einer ersten Ausführungsform des erfindungsgemäßen Verfahrens zur Messung der Relativgeschwindigkeit $v_{rel}$ mittels eines akustischen Sensors 1 erfolgt in einem ersten Schritt S1 zunächst ein Erzeugen eines akustischen Signals 2 mit einem ersten Frequenzverlauf, der den Verlauf einer Frequenz des akustischen Signals über einen Zeitverlauf beschreibt, wobei der erste Frequenzverlauf zumindest aus einem ersten Signalabschnitt 4 mit ansteigender Frequenz und einem zweiten Signalabschnitt 5 mit abfallender Frequenz besteht. Das Verfahren wird in dieser ersten Ausführungsform in periodischen Intervallen ausgeführt.
Ein solcher erster Signalabschnitt 4 mit ansteigender Frequenz wird auch als "Chirp-up" bezeichnet. Ein solcher zweiter Signalabschnitt 5 mit abfallender Frequenz wird auch als "Chirp-down" bezeichnet. Der erste Signalabschnitt 4 kann dabei zeitlich vor oder nach dem zweiten Signalabschnitt 5 in dem ersten Frequenzverlauf des akustischen Signals 2 angeordnet sein. Ferner können der erste Signalabschnitt 4 und der zweite Signalabschnitt 5 unmittelbar aufeinander folgen, oder aber durch einen dritten Signalabschnitt voneinander getrennt sein.
In der hier beschriebenen ersten Ausführungsform ist der Frequenzverlauf des akustischen Signals 2 durch den ersten Signalabschnitt 4 mit ansteigender Frequenz und den unmittelbar folgenden zweiten Signalabschnitt 5 mit abfallender Frequenz beschrieben. Der erste Frequenzverlauf dieses akustischen Signals ist in Figur 2 beispielhaft dargestellt. In dem ersten Signalabschnitt 4 steigt die Frequenz des akustischen Signals 2 innerhalb einer Millisekunde linear von 45kHz auf 54kHz an. In dem zweiten Signalabschnitt 5 fällt die Frequenz des akustischen Signals innerhalb einer Millisekunde linear von 54kHz auf 45kHz ab.
In einem zweiten Schritt S2 des Verfahrens, der auf den ersten Schritt S1 folgt, erfolgt ein Aussenden des akustischen Signals 2 durch einen akustischen Sensor 1. Der akustische Sensor 1 ist in dieser ersten Ausführungsform ein Ultraschallsensor. Im Unterschied zu einem FMCW-Verfahren wird nur ein zeitlich begrenztes akustisches Signal anstelle eines Dauertons ausgesendet. Somit ist der akustische Sensor kurz nach dem Absenden des akustischen Signals wieder bereit für einen Echoempfang auf dem selben Signalpfad.

In einem dritten Schritt S3 des Verfahrens, der auf den zweiten Schritt S2 folgt, wird ein von einem Objekt 6 reflektiertes akustisches Signal 3 mit einem zweiten Frequenzverlauf empfangen. Der zweite Frequenzverlauf beschreibt den Verlauf einer Frequenz des reflektierten akustischen Signals 3 über einen Zeitverlauf, wodurch der zweite Frequenzverlauf zumindest einen ersten reflektierten Signalabschnitt 7 mit ansteigender Frequenz und einen zweiten reflektierten Signalabschnitt 8 mit abfallender Frequenz umfasst.

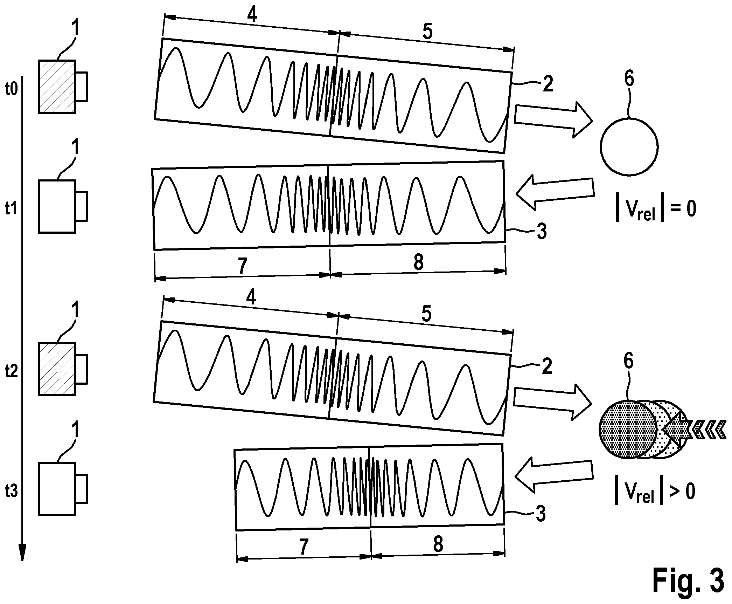

Das Aussenden des akustischen Signals 2 in dem zweiten Schritt S2, und das Empfangen des reflektierten akustischen Signals 3 in dem dritten Schritt S3 sind in Figur 3 dargestellt. In Figur 3 ist der akustische Sensor 1 und das akustische Signal 2 bzw. das reflektierte akustische Signal 3 zu unterschiedlichen Zeitpunkten dargestellt. Der akustische Sensor 1 sendet zu den Zeitpunkten t0 und t2 das akustische Signal 2 aus. Das akustische Signal 2 besteht aus dem erste Signalabschnitt 4 und dem zweiten Signalabschnitt 5, und somit aus einem Doppelpuls, der aus einem Chirp-up und einem Chirp-down besteht. Ein solcher Chirp-up bzw. Chirp-down hat beispielsweise eine Dauer von jeweils 1ms. Das akustische Signal trifft auf das Objekt 6, und wird von diesem reflektiert. Dadurch wird das reflektierte akustische Signal 3 erzeugt. Zu den Zeitpunkten t1 und t3 wird das reflektierte akustische Signal 3 von dem akustischen Sensor 1 empfangen. Ist eine Relativgeschwindigkeit $v_{rel}$ des Objektes 6 gegenüber dem akustischen Sensor Null, wie es in dem Zeitbereich zwischen t0 und t1 der Fall ist, so entspricht das reflektierte akustische Signal 3 dem akustischen Signal 2. Der erste Frequenzverlauf ist somit gleich dem zweiten Frequenzverlauf. Ist die Relativgeschwindigkeit $v_{rel}$ des Objektes 6 gegenüber dem akustischen Sensor 1 ungleich Null, wie es in dem Zeitbereich zwischen t2 und t3 der Fall ist, so entspricht das reflektierte akustische Signal 3 nicht dem akustischen Signal 2. In dem Zeitbereich zwischen t2 und t3 bewegt sich das Objekt 6 auf den akustischen Sensor 1 zu. Daher wird das akustische Signal 2 gestaucht und in seiner Frequenz als ganzes angehoben. Das reflektierte akustische Signal 3 ist somit ein dopplerverschobenes Echo des akustischen Signals 2.

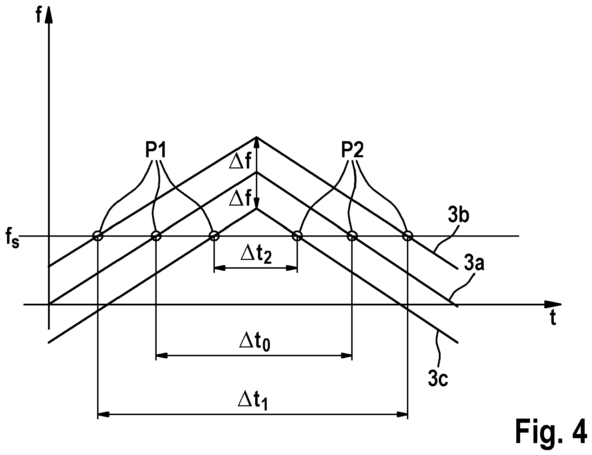

Eine Dopplerverschiebung des reflektierten akustischen Signals 3 ist in dem Frequenz-Zeit-Diagramm in Figur 4 gezeigt. Findet keine Relativbewegung des Objekts 6 gegenüber dem akustischen Sensor 1 statt, so entspricht das reflektierte akustische Signal 3 dem akustischen Signal 2. Das reflektierte akustische Signal 3 weist dann den unveränderten zweiten Frequenzverlauf 3a auf, der dem ersten Frequenzverlauf entspricht. Findet eine Relativbewegung des Objekts 6 in Richtung des akustischen Sensors 1 statt, so wird der erste Frequenzverlauf des akustischen Signals 2 bei einer Reflexion an dem Objekt 6 um eine Dopplerfrequenz $\Delta f$ angehoben. Es ergibt sich das reflektierte akustische Signal 3 mit einem gegenüber dem unveränderten zweiten Frequenzverlauf 3a angehobenen zweiten Frequenzverlauf 3b. Findet eine Relativbewegung des Objekts 6 von dem akustischen Sensor 1 weg statt, so wird der Frequenzverlauf des akustischen Signals 2 bei einer Reflexion an dem Objekt 6 um die Dopplerfrequenz $\Delta f$ abgesenkt. Es ergibt sich das reflektierte akustische Signal 3 mit einem gegenüber dem unveränderten zweiten Frequenzverlauf 3a abgesenkten zweiten Frequenzverlauf 3c.

In einem vierten Schritt S4 des Verfahrens, der auf den dritten Schritt S3 folgt, wird ein erster Punkt P1 aus dem ersten reflektierten Signalabschnitt 7 des zweiten Frequenzverlaufs des reflektierten akustischen Signals 3 gemäß einem Auswahlkriterium ausgewählt. In einem fünften Schritt S5 des Verfahrens, der parallel zu dem vierten Schritt S4 ausgeführt wird, wird ein zweiter Punkt P2 aus dem zweiten reflektierten Signalabschnitt 5 des zweiten Frequenzverlaufs des reflektierten akustischen Signals 3 gemäß dem Auswahlkriterium ausgewählt. In dieser ersten Ausführungsform ist das Auswahlkriterium eine Schwellenfrequenz $f_s$. Ein erster Punkt P1 aus dem ersten reflektierten Signalabschnitt 7 wird ausgewählt, wenn die Frequenz des reflektierten akustischen Signals 3 der Schwellenfrequenz $f_s$ entspricht. Ein zweiter Punkt P2 aus dem zweiten reflektierten Signalabschnitt 8 wird ausgewählt, wenn die Frequenz des reflektierten akustischen Signals 3 der Schwellenfrequenz $f_s$ entspricht.

Dabei ist es für den vierten und den fünften Schritt S4, S5 vorteilhaft, wenn das reflektierte akustische Signal 3 mit einer Mischfrequenz (z.B. 40kHz) multipliziert wird und damit in das Basisband heruntergemischt wird. Diese Operation findet auf dem digitalisierten Signal statt und kann mit kostengünstiger digitaler Signalverarbeitungs-Hard- und Software durchgeführt werden. Das Heruntermischen erfolgt bevorzugt im sogenannten Quadraturverfahren, welches zwei orthogonale Signale (I- und Q-Kanal) liefert, die um 90° Phasenverschoben sind. Eine Momentanfrequenz kann somit in einfacher Weise ermittelt werden, indem der momentane Phasenwinkel (arctan (I/Q)) ermittelt wird (z.B. im CORDIC-Verfahren errechnet) und dessen zeitliche Ableitung (z.B. durch gleitende Differenz aufeinanderfolgender Abtastwerte) ermittelt wird. Als Zwischenergebnis ergibt sich pro empfangenem reflektiertem akustischem Signal 3 ein dreickförmiger Frequenzverlauf über der Zeit, der dem Sendesignal entspricht. Beispiele für einen solchen Frequenzverlauf sind in Figur 4 gezeigt.

In einem sechsten Schritt S6 des Verfahrens, der auf den vierten und den fünften Schritt S4, S5 folgt, wird die Relativgeschwindigkeit $v_{rel}$ durch einen Vergleich eines durch den ersten Punkt P1 und den zweiten Punkt P2 in dem zweiten Frequenzverlauf des reflektierten akustischen Signals 3 beschriebenen Werts mit einem Referenzwert bestimmt. Dabei ist in dieser ersten Ausführungsform der durch den ersten Punkt P1 und den zweiten Punkt P2 in dem zweiten Frequenzverlauf des reflektierten akustischen Signals definierte Wert ein Zeitintervall $\Delta t$, welches zwischen dem Auftreten des ersten und des zweiten Punktes in dem zweiten Frequenzverlauf verstreicht.

Ist die Relativgeschwindigkeit $v_{rel}$ größer Null (Objekt 6 nähert sich dem akustischen Sensor 1), verschiebt sich die Frequenzlage des Echos, also des reflektierten akustischen Signals 3, zu höheren Frequenzen. Die Ablage zu einer stationären Szene ist im Mittel gleich der Dopplerfrequenz. Eine einfache Schätzung dieser Ablage kann durch Anlegen der Schwellenfrequenz $f_S$ auf der Frequenzachse erfolgen. Die Differenz der Zeitpunkte, zu denen die Schwelle von dem ersten Signalabschnitt 4 und dem zweiten Signalabschnitt 5 geschnitten wird vergrößert sich linear mit der Dopplerfrequenz und damit mit der Relativgeschwindigkeit $v_{rel}$.

Aus dem in Figur 4 gezeigten Frequenz-Zeit-Diagramm wird die Auswahl des ersten und des zweiten Punktes ersichtlich. Der erste Punkt P1 ist der Punkt des unveränderten zweiten Frequenzverlaufs 3a, des angehobenen zweiten Frequenzverlaufs 3b oder des abgesenkten zweiten Frequenzverlaufs 3c, der durch die Schwellenfrequenz $f_s$ beschrieben ist. Der zweite Punkt P2 ist der Punkt des zweiten Frequenzverlaufs 3a, des nach oben verschobenen zweiten Frequenzverlaufs 3b oder des nach unten verschobenen zweiten Frequenzverlaufs 3c, der durch die Schwellenfrequenz $f_s$ beschrieben ist. Im Falle des unveränderten zweiten Frequenzverlaufs 3a entspricht der durch den ersten Punkt P1 und den zweiten Punkt P1 in dem zweiten Frequenzverlauf des reflektierten akustischen Signals 3 definierte Wert dem Zeitintervall $\Delta t_0$. Im Falle des angehobenen zweiten Frequenzverlaufs 3b entspricht der durch den ersten Punkt P1 und den zweiten Punkt P2 in dem zweiten Frequenzverlauf des reflektierten akustischen Signals 3 definierte Wert dem Zeitintervall $\Delta t_1$. Im Falle des abgesenkten zweiten Frequenzverlaufs 3c entspricht der durch den ersten Punkt P1 und den zweiten Punkt P2 in dem zweiten Frequenzverlauf des reflektierten akustischen Signals 3 definierte Wert dem Zeitintervall $\Delta t_2$.

In der hier beschriebenen ersten Ausführungsform entspricht der Referenzwert dem Zeitintervall $\Delta t_0$. Somit ist der Referenzwert ein Wert, der durch den ersten und den zweiten Punkt in dem zweiten Frequenzverlauf des reflektierten akustischen Signals beschriebenen wird, wenn das Objekt keine relative Bewegung gegenüber dem akustischen Sensor aufweist. Die Relativgeschwindigkeit $v_{rel}$ ist durch einen Unterschied zwischen dem Referenzwert $\Delta t_0$ und dem Zeitintervall $\Delta t$ beschrieben und kann somit durch einen Vergleich von $\Delta t_0$ mit dem Zeitintervall $\Delta t$ bestimmt werden. Da $\Delta t_0$ konstant ist, und nur vom gewählten akustischen Signal 2 und der Schwellenfrequenz $f_s$ abhängig ist, wird der Referenzwert $\Delta t_0$ bei der Durchführung des Verfahrens nicht gemessen sondern als Vergleichswert bereitgestellt. Somit kann die Relativgeschwindigkeit $v_{rel}$ beispielsweise mittels einer Tabelle bestimmt werden.

Ebenso kann die Relativgeschwindigkeit $v_{rel}$ berechnet werden. Diese Berechnung basiert auf folgender Gleichung:

$$\Delta t_1 = \Delta t_0 + (2/m)\, \Delta f \qquad (1)$$

Dabei ist m die Steilheit (df/dt) des ersten reflektierten Signalabschnitts 7, welche durch eine Frequenzänderung über ein Zeitintervall beschrieben ist. Ein Wert für die Steilheit m kann entweder durch ein Abtasten des ersten reflektierten Signalabschnitts 7 ermittelt werden oder ein vorgegebener konstanter Wert sein. Dieser Wert kann insbesondere der Steilheit des ersten Signalabschnitts 4 entsprechen.

Daraus ergibt sich die Dopplerfrequenz $\Delta f$ zu:

$$\Delta f = (m/2)\, (\Delta t_1 - \Delta t_0) \qquad (2)$$

Die Relativgeschwindigkeit $v_{rel}$ ist näherungsweise:

$$v_{rel} = c\, (\Delta f\, /\, (2f_0 + \Delta f)) \qquad (3)$$

Dabei ist c die Schallgeschwindigkeit und $f_0$ eine mittlere Sendefrequenz des akustischen Signals 2.

In dieser ersten Ausführungsform beträgt die mittlere Sendefrequenz beispielsweise 48kHz. Die Schallgeschwindigkeit c wird mit einem Wert von 344m/s beschrieben. Es ergibt sich eine Vereinfachung der Formel (3) ohne signifikante Einbuße der Genauigkeit:

$$v_{rel}\, [km/h] = \Delta f\, /\, 76\ Hz \qquad\qquad bzw.$$

$$v_{rel}\, [km/h] = (m\, /\, 152\ Hz)\, (\Delta t_1 - \Delta t_0) \qquad (4)$$

Die Relativgeschwindigkeit $v_{rel}$ kann beispielsweise durch eine digitale Recheneinheit errechnet und als digitaler Wert bereitgestellt werden oder als ein analoger Wert bereitgestellt werden. Nach Abschluss des sechsten Schrittes S6 wird das Verfahren beendet.

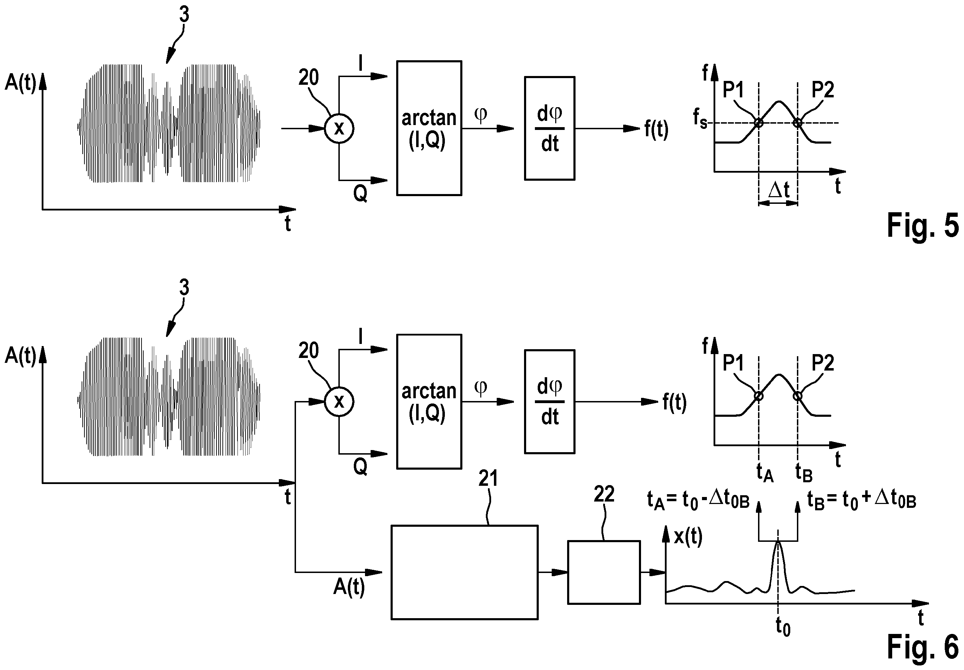

Figur 5 zeigt eine Prinzipdarstellung des Verfahrens in der ersten Ausführungsform. Das reflektierte akustische Signal 3 wird empfangen und durch einen Mischer 20 in zwei orthogonale Kanäle (I und Q) heruntergemischt. Der Mischer ist durch ein Oszillatorsignal mit einer Mischfrequenz $f_m$ an die mittlere Sendefrequenz des akustischen Signals 2 angepasst ($f_0 = f_m$). Ein Phasenwinkel $\varphi$ zwischen beiden Kanälen I und Q wird berechnet und dessen zeitliche Ableitung ergibt eine Momentanfrequenz pro Abtastpunkt. Der zeitliche Verlauf $f(t)$ der Momentanfrequenz entspricht dem akustischen Signal 2 abzüglich der Mischfrequenz $f_m$ und zuzüglich der Dopplerfrequenz $\Delta f$. Durch Anwendung einer Schwellenfrequenz $f_s$ auf der Frequenzachse kann die Zeitdifferenz $\Delta t$ ermittelt werden und damit auf die Dopplerfrequenz $\Delta f$ bzw. die Relativgeschwindigkeit $v_{rel}$ geschlossen werden (vgl. Formel 2).

Eine Steigerung der Genauigkeit wird erreicht, indem mehrere Schwellenfrequenzen $f_S$ ausgewertet werden und die damit ermittelten Relativgeschwindigkeiten $v_{rel}$ gemittelt werden. Der vierte Schritt S4 und der fünfte Schritt S5 werden somit mehrfach durchlaufen, wobei für jeden Durchlauf ein unterschiedliches Auswahlkriterium angewendet wird. Insbesondere bei überlagertem Rauschen auf dem reflektierten akustischen Signal kann dadurch eine Verbesserung erreicht werden.

In dieser ersten Ausführung kann der erste Signalabschnitt 4 auch hinter dem zweiten Signalabschnitt 5 in dem akustischen Signal 2 angeordnet sein. Ebenso kann der erste Signalabschnitt 4 durch einen dritten Signalabschnitt von dem zweiten Signalabschnitt 5 in dem akustischen Signal 2 getrennt sein. In diesem Falle muss die Dauer des dritten Signalabschnittes von dem Zeitintervall $\Delta t$ subtrahiert werden.

Eine zweite Ausführungsform des erfindungsgemäßen Verfahrens zur Messung der Relativgeschwindigkeit $v_{rel}$ mittels eines akustischen Sensors 1 entspricht in den ersten drei Verfahrensschritten S1, S2, S3 der zuvor beschriebenen ersten Ausführungsform.

In dem vierten Schritt S4 des Verfahrens, der auf den dritten Schritt S3 folgt, wird ein erster Punkt P1 aus dem ersten reflektierten Signalabschnitt 7 des zweiten Frequenzverlaufs des reflektierten akustischen Signals 3 gemäß einem Auswahlkriterium ausgewählt. In dem fünften Schritt S5 des Verfahrens, der parallel zu dem vierten Schritt S4 ausgeführt wird, wird ein zweiter Punkt P2 aus dem zweiten reflektierten Signalabschnitt 5 des zweiten Frequenzverlaufs des reflektierten akustischen Signals 3 gemäß dem Auswahlkriterium ausgewählt. In dieser zweiten Ausführungsform ist das Auswahlkriterium eine vorgegebener zeitlicher Abstand (eine Zeitspanne $\Delta t_{0b}$) des ersten und des zweiten Punktes zu einem Übergangspunkt P3 zwischen dem reflektierten ersten und dem reflektierten zweiten Signalabschnitt 7, 8 in dem zweiten Frequenzverlauf.

Der Übergangspunkt P3 in dem zweiten Frequenzverlauf wird dadurch erkannt, dass das reflektierte akustische Signal 3 mit einem Optimal-Filter gefiltert wird. Der Optimalfilter ist in seiner Impulsantwort an das akustische Signal 2 angepasst. Ein Ausgangssignal des Optimalfilters wird Tiefpassgefiltert und nach Maxima in der Signalamplitude des Ausgangssignals untersucht. Ein Maximum kennzeichnet einen Zeitpunkt $t_0$, an dem das Objektecho empfangen wurde und den Übergangspunkt P3 zwischen dem reflektierten ersten und dem reflektierten zweiten Signalabschnitt 7, 8 in dem zweiten Frequenzverlauf.

Ein erster Punkt P1 aus dem ersten reflektierten Signalabschnitt 7 wird ausgewählt, wenn dessen zeitliches Auftreten zu einem Zeitpunkt erfolgt, der die vorgegebene Zeitspanne $\Delta t_{0b}$ vor dem Zeitpunkt $t_0$ liegt. Ein zweiter Punkt P2 aus dem zweiten reflektierten Signalabschnitt 8 wird ausgewählt, wenn dessen zeitliches Auftreten zu einem Zeitpunkt erfolgt, der die vorgegebene Zeitspanne $\Delta t_{0b}$ nach dem Zeitpunkt $t_0$ liegt.

Dabei ist es für den vierten und den fünften Schritt S4, S5 vorteilhaft, wenn das reflektierte akustische Signal 3 mit einer Mischfrequenz (z.B. 40kHz) multipliziert wird und damit in das Basisband heruntergemischt wird. Diese Operation findet auf dem digitalisierten Signal statt und kann mit kostengünstiger digitaler Signalverarbeitungs-Hard- und Software durchgeführt werden. Das Heruntermischen erfolgt bevorzugt im sogenannten Quadraturverfahren, welches zwei orthogonale Signale (I- und Q-Kanal) liefert, die um 90° Phasenverschoben sind. Eine Momentanfrequenz kann somit in einfacher Weise ermittelt werden, indem der momentane Phasenwinkel (arctan (I/Q)) ermittelt wird (z.B. im CORDIC-Verfahren errechnet) und dessen zeitliche Ableitung (z.B. durch gleitende Differenz aufeinanderfolgender Abtastwerte) ermittelt wird. Als Zwischenergebnis ergibt sich pro empfangenem reflektiertem akustischem Signal 3 ein dreieckförmiger Frequenzverlauf über der Zeit, der dem Sendesignal entspricht. Beispiele für einen solchen Frequenzverlauf sind in Figur 4 gezeigt.

In dem sechsten Schritt S6 des Verfahrens, der auf den vierten und den fünften Schritt S4, S5 folgt, wird die Relativgeschwindigkeit $v_{rel}$ durch einen Vergleich eines durch den ersten Punkt P1 und den zweiten Punkt P2 in dem zweiten Frequenzverlauf des reflektierten akustischen Signals 3 beschriebenen Werts mit einem Referenzwert bestimmt. Dabei ist in dieser zweiten Ausführungsform der durch den ersten Punkt P1 und den zweiten Punkt P2 in dem zweiten Frequenzverlauf des reflektierten akustischen Signals definierte Wert ein Mittelwert der Frequenzen des akustischen Signals 3 zu den ausgewählten Punkten P1 und P2.

Figur 6 zeigt eine Prinzipdarstellung des Verfahrens in der zweiten Ausführungsform. Das reflektierte akustische Signal 3 wird empfangen und durch einen Mischer 20 in zwei orthogonale Kanäle (I und Q) heruntergemischt. Der Mischer ist durch ein Oszillatorsignal mit einer Mischfrequenz $f_m$ an die mittlere Sendefrequenz des akustischen Signals

2 angepasst ($f_0 = f_m$). Ein Phasenwinkel zwischen beiden Kanälen I und Q wird berechnet und dessen zeitliche Ableitung ergibt eine Momentanfrequenz pro Abtastpunkt. Der zeitliche Verlauf $f(t)$ der Momentanfrequenz entspricht dem akustischen Signal 2 abzüglich der Mischfrequenz $f_m$ und zuzüglich der Dopplerfrequenz $\Delta f$.

Parallel dazu wird das reflektierte akustische Signal 3 durch einen Optimalfilter 21 mit einem Referenzsignal gefiltert. Das Ausgangssignal des Optimalfilters 21 wird durch einen Tiefpass 22 gefiltert und nach Maxima untersucht. Ein Maximum kennzeichnet den Zeitpunkt $t_0$, zu dem ein Objektecho empfangen wurde. Gleichzeitig kennzeichnet es auch den Zeitpunkt $t_0$ der Frequenzspitze des reflektierten akustischen Signals 3 und somit den Übergangspunkt P3. In einem Abstand mit einer Länge der vorgegebene Zeitspanne $\Delta t_{0B}$ wird vor und nach dem Übergangspunkt P3 eine jeweilige Momentanfrequenz und somit eine erste Frequenz $f_A$ und eine zweite Frequenz $f_B$ ermittelt. Die erste Frequenz $f_A$ und die zweite Frequenz $f_B$ wird entweder direkt ermittelt, oder durch Mitteln eines Zeitfensters um einen jeweiligen Zeitpunkte $t_A$ und $t_B$ ermittelt. Ein solches Zeitfenster könnte beispielsweise einen Zeitbereich von +/- 0,25ms um den Zeitpunkt $t_A$ bzw. den Zeitpunkt $t_B$ beschreiben.

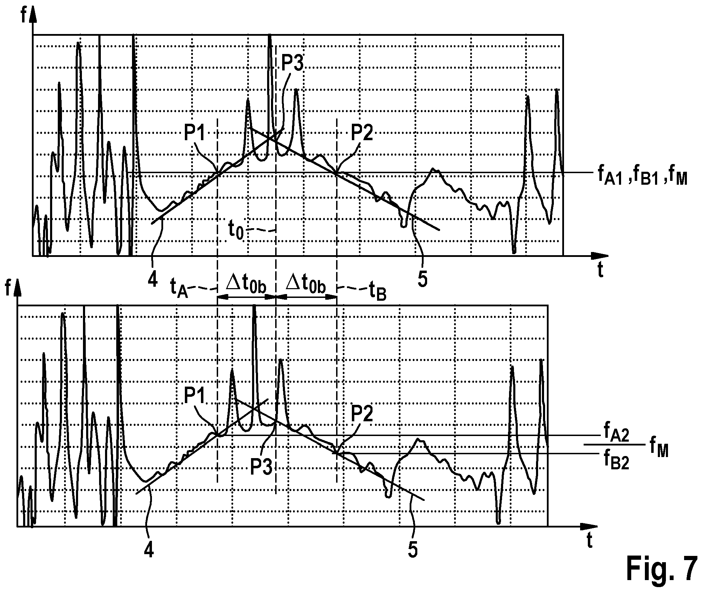

Figur 7 zeigt zwei Frequenz-Zeit-Diagramme des reflektierten akustischen Signals 3. Aus diesen wird die Auswahl des ersten Punktes P1 und des zweiten Punktes P2 aus dem zweiten Frequenzverlauf ersichtlich. Der Übergangspunkt P3 wird bei einem Zeitpunkt $t_0$ erkannt. Der erste Punkt P1 ist der Punkt des zweiten Frequenzverlaufs, der die vorgegebene Zeitspanne $\Delta t_{0B}$ vor dem Übergangspunkt P3 zu einem Zeitpunkt $t_A$ auftritt. Der zweite Punkt P2 ist der Punkt des zweiten Frequenzverlaufs, der die vorgegebene Zeitspanne $\Delta t_{0B}$ nach dem Übergangspunkt P3 zu einem Zeitpunkt $t_B$ auftritt.

In dem oberen in Figur 7 gezeigten Frequenz-Zeit-Diagramm erfolgt eine korrekte Auswahl des Zeitpunktes $t_0$. Der erste Punkt P1 ist durch eine erste korrekte Frequenz $f_{A1}$ gekennzeichnet. Der zweite Punkt P2 ist durch eine zweite korrekte Frequenz $f_{B1}$ gekennzeichnet. Der durch den ersten Punkt P1 und den zweiten Punkt P2 in dem zweiten Frequenzverlauf des reflektierten akustischen Signals 3 definierte Wert ist ein Mittelwert zwischen der ersten Frequenz $f_{A1}$ und der zweiten Frequenz $f_{B1}$. Dieser Mittelwert beschreibt eine Mittelfrequenz $f_M$. Aufgrund der korrekten Auswahl des Zeitpunktes $t_0$ mittels des Optimalfilters sind die erste Frequenz $f_{A1}$ und die zweite Frequenz $f_{B1}$ praktisch gleich, vorausgesetzt, die Steigungen des ersten und des zweiten Signalabschnitts 4, 5 haben näherungsweise gleiche Beträge.

In der hier beschriebenen zweiten Ausführungsform entspricht ein Referenzwert $f_{M0}$ der Mittelfrequenz $f_M$, falls das Objekt 6 keine relative Bewegung gegenüber dem akustischen Sensor aufweist. Somit ist der Referenzwert $f_{M0}$ ein Wert, der durch den ersten Punkt P1 und den zweiten Punkt P2 in dem zweiten Frequenzverlauf des reflektierten akustischen Signals 3 definiert wird, wenn das Objekt 6 keine relative Bewegung gegenüber dem akustischen Sensor 1 aufweist.

Die Mittelfrequenz $f_M$ ist der Mittelwert zwischen der ersten Frequenz $f_A$ und der zweiten Frequenz $f_B$.

$$f_M = \tfrac{1}{2}\,(f_A + f_B) \qquad (5)$$

Das untere in Figur 7 gezeigten Frequenz-Zeit-Diagramm des reflektierten akustischen Signals 3 zeigt eine fehlerhafte Auswahl des Zeitpunktes $t_0$. Eine fehlerhafte Auswahl kann beispielsweise durch einen Mismatch des Optimalfilters 20 aufgrund von Signalrauschen vorkommen. Der erste Punkt P1 ist durch eine erste fehlerhafte Frequenz $f_{A2}$ gekennzeichnet. Der zweite Punkt P2 ist durch eine zweite fehlerhafte Frequenz $f_{B2}$ gekennzeichnet. Es ist ersichtlich, dass sowohl der erste Punkt P1 als auch der zweite Punkt P2 aufgrund der fehlerhaften Auswahl des Zeitpunktes $t_0$ in dem Frequenz-Zeit-Diagramm nach hinten verschoben sind. Die erste fehlerhafte Frequenz $f_{A2}$ nimmt somit einen höheren Wert an. Die zweite fehlerhafte Frequenz $f_{B2}$ nimmt somit einen niedrigeren Wert an. Da die Mittelfrequenz $f_M$ in diesem Falle der Mittelwert zwischen der ersten fehlerhaften Frequenz $f_{A2}$ und der zweiten fehlerhaften Frequenz $f_{B2}$ ist, ist diese gleich der Mittelfrequenz $f_M$ bei einer korrekten Auswahl des Zeitpunktes $t_0$. Dies ist allerdings nur dann der Fall, wenn der zeitliche Anstieg der Frequenz des akustischen Signals 2 in dem ersten Signalabschnitt 4 dem zeitlichen Abfall der Frequenz in dem zweiten Signalabschnitt 5 entspricht.

$$f_M = \tfrac{1}{2}\,(f_{A1} + f_{B1}) = \tfrac{1}{2}\,(f_{A2} + f_{B2}) \qquad (6)$$

Somit ergibt sich eine Ausführungsform des erfindungsgemäßen Verfahrens, welches sehr robust gegenüber einer Fehlbestimmung des Objekt-Ortes ist.

Das Bestimmen der Relativgeschwindigkeit $v_{rel}$ erfolgt durch einen Vergleich der Mittelfrequenz $f_M$ mit dem Referenzwert $f_{M0}$. Da der Referenzwert $f_{M0}$ konstant ist, und nur vom gewählten akustischen Signal 2 und der Zeitspanne $\Delta t_{0b}$ abhängig ist, wird der Referenzwert $f_{M0}$ bei der Durchführung des Verfahrens nicht gemessen sondern als Vergleichswert bereitgestellt. Somit kann die Relativgeschwindigkeit $v_{rel}$ beispielsweise mittels einer Tabelle bestimmt werden.

Alternativ kann die Relativgeschwindigkeit $v_{rel}$ berechnet werden. Diese Berechnung basiert auf folgender Gleichung:

$$f_M = f_{M0} + \Delta f \qquad (7)$$

Daraus ergibt sich die Dopplerfrequenz $\Delta f$ zu:

$$\Delta f = f_M - f_{M0} \qquad (8)$$

Die Relativgeschwindigkeit $v_{rel}$ ist näherungsweise:

$$v_{rel} = c \left( \Delta f / (2f_0 + \Delta f) \right) \qquad (9)$$

Dabei ist c die Schallgeschwindigkeit und $f_0$ eine mittlere Sendefrequenz des akustischen Signals 2. In dieser ersten Ausführungsform beträgt die mittlere Sendefrequenz beispielsweise 48kHz. Die Schallgeschwindigkeit c wird mit einem Wert von 344m/s beschrieben.

Die Relativgeschwindigkeit $v_{rel}$ kann beispielsweise durch eine digitale Recheneinheit errechnet und als digitaler Wert bereitgestellt werden oder als ein analoger Wert bereitgestellt werden. Nach Abschluss des sechsten Schrittes S6 wird das Verfahren beendet.

Der Mittelwert $f_M$ der ersten Frequenz $f_A$ und der zweite Frequenz $f_B$ ist gleich dem Referenzwert $f_{M0}$ zuzüglich oder abzüglich der Dopplerfrequenz (vgl. Formel 8). Daraus lässt sich die Dopplerfrequenz $\Delta f$ und damit wiederum die Relativgeschwindigkeit $v_{rel}$ bestimmen (vgl. Formel 9).

Eine Steigerung der Genauigkeit wird in allen Ausführungsformen erreicht, indem nicht nur ein erster Signalabschnitt 4 und ein zweiter Signalabschnitt 5 in einem akustischen Signal eingebracht sind, sondern indem mehrere erste und mehrere zweite Signalabschnitte 4, 5 ein akustisches Signal beschreiben. Somit umfasst der erste Frequenzverlauf mehrere Paare von ersten Signalabschnitten 4 und zweiten Signalabschnitten 5 und der zweite Frequenzverlauf somit mehrere Paare von reflektierten ersten Signalabschnitten 4 und reflektierten zweiten Signalabschnitten 5. Das Auswählen des ersten Punktes P1 sowie das Auswählen eines zweiten Punktes P2 wird für jedes der Paare von reflektierten ersten Signalabschnitten 7 und reflektierten zweiten Signalabschnitten 8 durchgeführt. Das Bestimmen der Relativgeschwindigkeit $v_{rel}$ wird für jedes der Paare von reflektierten ersten und reflektierten zweiten Signalabschnitten 7, 8 durchgeführt. Das Verfahren umfasst in diesem Falle ferner einen abschließenden Schritt, in dem ein Mittelwert aus den bestimmten Relativgeschwindigkeiten gebildet wird.

Eine Steigerung der Störsicherheit wird in allen Ausführungsformen erreicht, indem ein Ansteigen der Frequenz in dem ersten Signalabschnitt 4 und das Abfallen der Frequenz in dem zweiten Signalabschnitt 5 hinsichtlich seiner Steilheit im Frequenzverlauf und/oder hinsichtlich der Anfangs- und Endfrequenz variiert wird. Auf diese Weise können insbesondere externe Störeinflüsse unterdrückt werden.

In dieser zweiten Ausführung kann der erste Signalabschnitt (4) auch hinter dem zweiten Signalabschnitt (5) in dem akustischen Signal (2) angeordnet sein. Ebenso kann der erste Signalabschnitt (4) durch einen dritten Signalabschnitt von dem zweiten Signalabschnitt (5) in dem akustischen Signal (2) getrennt sein. In diesem Falle liegt der Übergangspunkt im zeitlichen Mittelpunkt des dritten Signalabschnittes. Die Zeitspanne $\Delta t_{0B}$ sollte größer als die Hälfte der Dauer des dritten Signalabschnitts sein.

**Patentansprüche**

1. Verfahren zur Messung einer Relativgeschwindigkeit mittels eines akustischen Sensors (1), umfassend die Schritte:

- Erzeugen eines akustischen Signals (2) mit einem ersten Frequenzverlauf, der den Verlauf einer Frequenz des akustischen Signals (2) über einen Zeitverlauf beschreibt, wobei der erste Frequenzverlauf zumindest aus einem ersten Signalabschnitt (4) mit ansteigender Frequenz und einem zweiten Signalabschnitt (5) mit abfallender Frequenz besteht,
- Aussenden des akustischen Signals (2) durch einen akustischen Sensor (1),
- Empfangen eines von einem Objekt (6) reflektierten akustischen Signals (3) mit einem zweiten Frequenzverlauf, der den Verlauf einer Frequenz des reflektierten akustischen Signals (3) über einen Zeitverlauf beschreibt, wodurch der zweite Frequenzverlauf zumindest einen ersten reflektierten Signalabschnitt (7) mit ansteigender Frequenz und einen zweiten reflektierten Signalabschnitt (8) mit abfallender Frequenz umfasst, durch den akustischen Sensor (1),
- Auswählen eines ersten Punktes (P1) aus dem ersten reflektierten Signalabschnitt (7) des zweiten Frequenzverlaufs des reflektierten akustischen Signals (3) gemäß einem Auswahlkriterium,
- Auswählen eines zweiten Punktes (P2) aus dem zweiten reflektierten Signalabschnitt (8) des zweiten Frequenzverlaufs des reflektierten akustischen Signals (3) gemäß dem Auswahlkriterium, und
- Bestimmen einer Relativgeschwindigkeit ($v_{rel}$) durch einen Vergleich eines durch den ersten und den zweiten Punkt (P1, P2) in dem zweiten Frequenzverlauf des reflektierten akustischen Signals (3) beschriebenen Werts mit einem Referenzwert.

2. Verfahren nach Anspruch 1, **dadurch gekennzeichnet, dass** der Referenzwert ein Wert ist, der durch den ersten und den zweiten Punkt (P1, P2) in dem zweiten Frequenzverlauf des reflektierten akustischen Signals (3) beschrieben wird, wenn das Objekt (6) keine relative Bewegung gegenüber dem akustischen Sensor (1) aufweist.

3. Verfahren nach einem der vorgehenden Ansprüche, **dadurch gekennzeichnet, dass** das reflektierte akustische Signal (3) zum Auswählen des ersten und des zweiten Punktes (P1, P2) zur Darstellung im Frequenzbereich in den zweiten Frequenzverlauf transformiert wird.

4. Verfahren nach einem der vorgehenden Ansprüche, **dadurch gekennzeichnet, dass** die Schritte des Auswählens des ersten Punktes (P1), des Auswählens des zweiten Punktes (P2) und des Bestimmens der Relativgeschwindigkeit ($v_{rel}$) mehrfach durchlaufen werden, wobei für jeden Durchlauf ein unterschiedliches Auswahlkriterium angewendet wird, und das Verfahren ferner einen abschließenden Schritt umfasst, in dem ein Mittelwert aus den bestimmten Relativgeschwindigkeiten ($v_{rel}$) gebildet wird.

5. Verfahren nach einem der Ansprüche 1 bis 4, **dadurch gekennzeichnet, dass** das Auswahlkriterium eine vorgegebene Frequenz ist, und das Bestimmen der Relativgeschwindigkeit ($v_{rel}$) durch einen Vergleich eines Zeitintervalls ($\Delta t$) mit dem Referenzwert erfolgt, wobei das Zeitintervall ($\Delta t$) durch einen zeitlichen Abstand zwischen dem ersten und dem zweiten Punkt (P1, P2) in dem zweiten Frequenzverlauf des reflektierten akustischen Signals (3) beschrieben ist.

6. Verfahren nach einem der Ansprüche 1 bis 4, **dadurch gekennzeichnet, dass** das Auswahlkriterium ein vorgegebener zeitlicher Abstand des ersten und des zweiten Punktes (P1, P2) zu einem Übergangspunkt (P3) zwischen dem reflektierten ersten und dem reflektierten zweiten Signalabschnitt (7, 8) in dem zweiten Frequenzverlauf ist, und das Bestimmen der Relativgeschwindigkeit ($v_{rel}$) durch einen Vergleich einer Mittelfrequenz ($f_M$) mit dem Referenzwert erfolgt, wobei die Mittelfrequenz ($f_M$) durch einen Mittelwert der Frequenz an dem ersten und dem zweiten Punkt (P1, P2) des zweiten Frequenzverlaufs des reflektierten akustischen Signals (3) beschrieben ist.

7. Verfahren nach Anspruch 6, **dadurch gekennzeichnet, dass** der Übergangspunkt (P3) in dem zweiten Frequenzverlauf dadurch erkannt wird, dass das reflektierte akustische Signal (3) mit einem Optimal-Filter (20) gefiltert wird.

8. Verfahren nach einem der vorgehenden Ansprüche, **dadurch gekennzeichnet, dass** bei einer wiederholten Ausführung des Verfahrens die Dauer des ersten Signalabschnitts (4) und die Dauer des zweiten Signalabschnitts (5) bei einer ersten Ausführung gegenüber der Dauer des ersten Signalabschnitts (4) mit und/oder der Dauer des zweiten Signalabschnitts (5) bei einer wiederholten Ausführung variiert wird.

9. Verfahren nach einem der vorgehenden Ansprüche, **dadurch gekennzeichnet, dass**

- der erste Frequenzverlauf mehrere Paare von ersten Signalabschnitten (4) und zweiten Signalabschnitten (5) umfasst und der zweite Frequenzverlauf somit mehrere Paare von reflektierten ersten Signalabschnitten (7) und reflektierten zweiten Signalabschnitten (8) umfasst,
- das Auswählen eines ersten Punktes (P1) sowie das Auswählen eines zweiten Punktes (P2) für jedes der Paare von reflektierten ersten Signalabschnitten (7) und reflektierten zweiten Signalabschnitten (8) durchgeführt wird,
- das Bestimmen einer Relativgeschwindigkeit ($v_{rel}$) für jedes der Paare von reflektierten ersten und reflektierten zweiten Signalabschnitten (7, 8) durchgeführt wird, und
- das Verfahren ferner einen abschließenden Schritt umfasst, in dem ein Mittelwert aus den bestimmten Relativgeschwindigkeiten ($v_{rel}$) gebildet wird.

**10.** Vorrichtung zur Messung einer Relativgeschwindigkeit ($v_{rel}$) mittels eines akustischen Sensors (1), umfassend:

- einen Signalgenerator, der zum Erzeugen eines akustischen Signals (2) mit einem ersten Frequenzverlauf geeignet ist, wobei der erste Frequenzverlauf zumindest aus einer ersten Signalabschnitt (4) mit ansteigender Frequenz und einer zweiten Signalabschnitt (5) mit abfallender Frequenz besteht,
- einen akustischen Sensor (1), der zum Aussenden des akustischen Signals (2) und zu einem Empfangen eines von einem Objekt reflektierten akustischen Signals (3) mit einem zweiten Frequenzverlauf geeignet ist, der den Verlauf einer Frequenz des reflektierten akustischen Signals (3) über einen Zeitverlauf beschreibt, wodurch der zweite Frequenzverlauf zumindest einen ersten reflektierten Signalabschnitt (7) mit ansteigender Frequenz und einen zweiten reflektierten Signalabschnitt (8) mit abfallender Frequenz umfasst, **dadurch gekennzeichnet, dass**
- eine Auswahleinheit vorgesehen ist, die zum Auswählen eines ersten Punktes (P1) aus dem reflektierten ersten Signalabschnitt (7) des zweiten Frequenzverlaufs des reflektierten akustischen Signals (3) gemäß einem Auswahlkriterium, und zum Auswählen eines zweiten Punktes (P2) aus dem reflektierten zweiten Signalabschnitt (8) des zweiten Frequenzverlaufs des reflektierten akustischen Signals (3) gemäß dem Auswahlkriterium geeignet ist, und
- eine Bestimmungseinheit vorgesehen ist, die zum Bestimmen einer Relativgeschwindigkeit ($v_{rel}$) durch einen Vergleich eines durch den ersten und den zweiten Punkt (P1, P2) in dem zweiten Frequenzverlauf des reflektierten akustischen Signals (3) beschriebenen Werts mit einem Referenzwert geeignet ist.

**Claims**

**1.** Method for measuring a relative velocity by means of an acoustic sensor (1), comprising the steps of:

- generating an acoustic signal (2) having a first frequency characteristic that describes the characteristic of a frequency of the acoustic signal (2) over a time characteristic, wherein the first frequency characteristic consists of at least a first signal portion (4) having a rising frequency and a second signal portion (5) having a falling frequency,
- transmitting the acoustic signal (2) by means of an acoustic sensor (1),
- receiving an acoustic signal (3), reflected by an object (6), having a second frequency characteristic that describes the characteristic of a frequency of the reflected acoustic signal (3) over a time characteristic, as a result of which the second frequency characteristic comprises at least a first reflected signal portion (7) having a rising frequency and a second reflected signal portion (8) having a falling frequency, by means of the acoustic sensor (1),
- selecting a first point (P1) from the first reflected signal portion (7) of the second frequency characteristic of the reflected acoustic signal (3) in accordance with a selection criterion,
- selecting a second point (P2) from the second reflected signal portion (8) of the second frequency characteristic of the reflected acoustic signal (3) in accordance with the selection criterion, and
- determining a relative velocity ($v_{rel}$) by comparing a value described by the first and second points (P1, P2) in the second frequency characteristic of the reflected acoustic signal (3) with a reference value.

**2.** Method according to Claim 1, **characterized in that** the reference value is a value that is described by the first and second points (P1, P2) in the second frequency characteristic of the reflected acoustic signal (3) when the object (6) has no relative movement vis-à-vis the acoustic sensor (1).

**3.** Method according to either of the preceding claims, **characterized in that** the reflected acoustic signal (3) is transformed into the second frequency characteristic for the purpose of selecting the first and second points (P1, P2) for the purpose of representation in the frequency domain.

**4.** Method according to one of the preceding claims, **characterized in that** the steps of selecting the first point (P1), selecting the second point (P2) and determining the relative velocity ($v_{rel}$) are performed repeatedly, with a different selection criterion being applied for each pass, and the method further comprises a concluding step in which a mean value is formed from the determined relative velocities ($V_{rel}$).

**5.** Method according to one of Claims 1 to 4, **characterized in that** the selection criterion is a prescribed frequency, and the determining of the relative velocity ($v_{rel}$) is effected by comparing a time interval ($\Delta t$) with the reference value, wherein the time interval ($\Delta t$) is described by an interval of time between the first and second points (P1, P2) in the second frequency characteristic of the reflected acoustic signal (3).

6. Method according to one of Claims 1 to 4, **characterized in that** the selection criterion is a prescribed interval of time between the first and second points (P1, P2) and a transition point (P3) between the reflected first and the reflected second signal portion (7, 8) in the second frequency characteristic, and the determining of the relative velocity ($v_{rel}$) is effected by comparing a medium frequency ($f_M$) with the reference value, wherein the medium frequency ($f_M$) is described by a mean value of the frequency at the first and second points (P1, P2) of the second frequency characteristic of the reflected acoustic signal (3).

7. Method according to Claim 6, **characterized in that** the transition point (P3) in the second frequency characteristic is detected by virtue of the reflected acoustic signal (3) being filtered by means of an optimal filter (20).

8. Method according to one of the preceding claims, **characterized in that** a repeat performance of the method results in the duration of the first signal portion (4) and the duration of the second signal portion (5) during a first performance being varied vis-à-vis the duration of the first signal portion (4) with and/or the duration of the second signal portion (5) during a repeat performance.

9. Method according to one of the preceding claims, **characterized in that**

   - the first frequency characteristic comprises multiple pairs of first signal portions (4) and second signal portions (5) and the second frequency characteristic therefore comprises multiple pairs of reflected first signal portions (7) and reflected second signal portions (8),
   - the selection of a first point (P1) and the selection of a second point (P2) are performed for each of the pairs of reflected first signal portions (7) and reflected second signal portions (8),
   - the determination of a relative velocity ($V_{rel}$) is performed for each of the pairs of reflected first and reflected second signal portions (7, 8), and
   - the method further comprises a concluding step in which a mean value is formed from the determined relative velocities ($V_{rel}$).

10. Apparatus for measuring a relative velocity ($V_{rel}$) by means of an acoustic sensor(1), comprising:

    - a signal generator suitable for generating an acoustic signal (2) having a first frequency characteristic, wherein the first frequency characteristic consists of at least a first signal portion (4) having a rising frequency and a second signal portion (5) having a falling frequency,
    - an acoustic sensor (1) suitable for transmitting the acoustic signal (2) and for receiving an acoustic signal (3), reflected by an object, having a second frequency characteristic that describes the characteristic of a frequency of the reflected acoustic signal (3) over a time characteristic, as a result of which the second frequency characteristic comprises at least a first reflected signal portion (7) having a rising frequency and a second reflected signal portion (8) having a falling frequency, **characterized in that**
    - a selection unit is provided that is suitable for selecting a first point (P1) from the reflected first signal portion (7) of the second frequency characteristic of the reflected acoustic signal (3) in accordance with a selection criterion, and for selecting a second point (P2) from the reflected second signal portion (8) of the second frequency characteristic of the reflected acoustic signal (3) in accordance with the selection criterion, and
    - a determination unit is provided that is suitable for determining a relative velocity ($v_{rel}$) by comparing a value described by the first and second points (P1, P2) in the second frequency characteristic of the reflected acoustic signal (3) with a reference value.

**Revendications**

1. Procédé de mesure d'une vitesse relative au moyen d'un capteur acoustique (1), comprenant les étapes consistant à :

   - générer un signal acoustique (2) présentant une première réponse en fréquence qui décrit la variation dans le temps d'une fréquence du signal acoustique (2), dans lequel la première réponse en fréquence est constituée d'au moins une première partie de signal (4) de fréquence croissante et d'une deuxième partie de signal (5) de fréquence décroissante,
   - émettre le signal acoustique (2) par l'intermédiaire d'un capteur acoustique (1),
   - recevoir par l'intermédiaire du capteur acoustique (1) un signal acoustique (3) réfléchi par un objet (6) et présentant une deuxième réponse en fréquence qui décrit la variation dans le temps d'une fréquence du signal acoustique réfléchi (3), la deuxième réponse en fréquence comprenant au moins une première partie de signal réfléchie (7) de fréquence croissante et une deuxième partie de signal réfléchie (8) de fréquence décroissante,

- sélectionner selon un critère de sélection un premier point (P1) dans la première partie de signal réfléchie (7) de la deuxième réponse en fréquence du signal acoustique réfléchi (3),

- sélectionner selon le critère de sélection un deuxième point (P2) dans la deuxième partie de signal réfléchie (8) de la deuxième réponse en fréquence du signal acoustique réfléchi (3), et

- déterminer une vitesse relative ($v_{rel}$) en comparant une valeur décrite par les premier et deuxième points (P1, P2) dans la deuxième réponse en fréquence du signal acoustique réfléchi (3) à une valeur de référence.

2. Procédé selon la revendication 1, **caractérisé en ce que** la valeur de référence est une valeur décrite par les premier et deuxième points (P1, P2) dans la deuxième réponse en fréquence du signal acoustique réfléchi (3) lorsque l'objet (6) ne présente aucun déplacement relatif par rapport au capteur acoustique (1).

3. Procédé selon l'une des revendications précédentes, **caractérisé en ce que** le signal acoustique réfléchi (3) est transformé en la deuxième réponse en fréquence pour sélectionner les premier et deuxième points (P1, P2) à des fins de représentation dans le domaine des fréquences.

4. Procédé selon l'une des revendications précédentes, **caractérisé en ce que** les étapes de sélection du premier point (P1), de sélection du deuxième point (P2) et de détermination de la vitesse relative ($v_{rel}$) sont exécutées plusieurs fois, dans lequel un critère de sélection différent est appliqué pour chaque exécution, et le procédé comprend en outre une étape finale lors de laquelle une valeur moyenne est calculée à partir des vitesses relatives ($v_{rel}$) déterminées.

5. Procédé selon l'une des revendications 1 à 4, **caractérisé en ce que** le critère de sélection est une fréquence prédéterminée, et la détermination de la vitesse relative ($v_{rel}$) est effectuée en comparant un intervalle de temps ($\Delta t$) à la valeur de référence, dans lequel l'intervalle de temps ($\Delta t$) est décrit par une distance temporelle entre les premier et deuxième points (P1, P2) dans la deuxième réponse en fréquence du signal acoustique réfléchi (3).

6. Procédé selon l'une des revendications 1 à 4, **caractérisé en ce que** le critère de sélection est une distance temporelle prédéterminée des premier et deuxième points (P1, P2) par rapport à un point de transition (P3) entre les première et deuxième parties de signal réfléchies (7, 8) dans la deuxième réponse en fréquence, et la détermination de la vitesse relative ($v_{rel}$) est effectuée en comparant une fréquence moyenne ($f_M$) à la valeur de référence, dans lequel la fréquence moyenne ($f_M$) est décrite par une valeur moyenne de la fréquence aux premier et deuxième points (P1, P2) de la deuxième réponse en fréquence du signal acoustique réfléchi (3).

7. Procédé selon la revendication 6, **caractérisé en ce que** le point de transition (P3) de la deuxième réponse en fréquence est détecté par filtrage du signal acoustique réfléchi (3) à l'aide d'un filtre optimal (20) .

8. Procédé selon l'une des revendications précédentes, **caractérisé en ce que** la durée de la première partie de signal (4) est amenée à varier lors d'une exécution répétée du procédé, et la durée de la deuxième partie de signal (5) est amenée à varier par rapport à la durée de la première partie de signal (4) lors d'une première exécution avec et/ou par rapport à la durée de la deuxième partie de signal (5) lors d'une exécution répétée.

9. Procédé selon l'une des revendications précédentes, **caractérisé en ce que**

- la première réponse en fréquence comprend plusieurs paires de premières parties de signal (4) et de deuxièmes parties de signal (5) et la deuxième réponse en fréquence comprend de ce fait plusieurs paires de premières parties de signal réfléchies (7) et de deuxièmes parties de signal réfléchies (8),

- la sélection d'un premier point (P1) et la sélection d'un deuxième point (P2) pour chacune des paires de premières parties de signal réfléchies (7) et de deuxièmes parties de signal réfléchies (8) est effectuée,

- la détermination d'une vitesse relative ($v_{rel}$) pour chacune des paires de premières et de deuxièmes parties de signal réfléchies (7, 8) est effectuée, et

- le procédé comprend en outre une étape finale lors de laquelle une valeur moyenne est calculée à partir des vitesses relatives ($v_{rel}$) déterminées.

10. Dispositif de mesure d'une vitesse relative ($v_{rel}$) au moyen d'un capteur acoustique (1), comprenant :

- un générateur de signal conçu pour générer un signal acoustique (2) présentant une première réponse en fréquence, dans lequel la première réponse en fréquence est constituée d'au moins une première partie de signal (4) de fréquence croissante et d'une deuxième partie de signal (5) de fréquence décroissante,

- un capteur acoustique (1) qui est approprié pour émettre le signal acoustique (2) et pour recevoir un signal acoustique (3) réfléchi par un objet et présentant une deuxième réponse en fréquence qui décrit la variation dans le temps d'une fréquence du signal acoustique réfléchi (3), la deuxième réponse en fréquence comprenant au moins une première partie de signal réfléchie (7) de fréquence croissante et une deuxième partie de signal réfléchie (8) de fréquence décroissante, **caractérisé en ce qu'**il est prévu

- une unité de sélection destinée à sélectionner selon un critère de sélection un premier point (P1) dans la première partie de signal réfléchie (7) de la deuxième réponse en fréquence du signal acoustique réfléchi (3) et à sélectionner selon le critère de sélection un deuxième point (P2) dans la deuxième partie de signal réfléchie (8) de la deuxième réponse en fréquence du signal acoustique réfléchi (3), et

- une unité de détermination destinée à déterminer une vitesse relative ($v_{rel}$) en comparant une valeur décrite par les premier et deuxième points (P1, P2) dans la deuxième réponse en fréquence du signal acoustique réfléchi (3) à une valeur de référence.

Fig. 1

Fig. 2

Fig. 3

Fig. 4

**Fig. 5**

$t_A = t_0 - \Delta t_{0B}$    $t_B = t_0 + \Delta t_{0B}$

**Fig. 6**

Fig. 7

EP 3 071 989 B1